# EUROPEAN PATENT SPECIFICATION

(11) **EP 1 885 193 B1**
(45) Date of publication and mention of the grant of the patent: **24.07.2013**
(21) Application number: 06755893.2
(22) Date of filing: 19.05.2006
(51) Int. Cl.: A23F 3/22

(54) **A BUSH TEA PRODUCT**
KRÄUTERTEEPRODUKT
PRODUIT DE THE DE TYPE ROOIBOS BUSH

(30) Priority: 23.05.2005 ZA 200504141; 10.10.2005 ZA 200508187
(43) Date of publication of application: 13.02.2008
(73) Proprietor: The Red Espresso Company (Proprietary) Limited, Cape Town, Western Cape Province 7600 (ZA)
(72) Inventor: PRETORIUS, Carl, William, Noorde Paarl, Western Cape Prov. 7600 (ZA)
(74) Representative: Sherrard-Smith, Hugh
(86) International application number: PCT/IB2006/001308
(87) International publication number: WO 2006/126053

(56) References cited:
- GB-A- 190 707 267
- MORTON J F: "ROOIBOS TEA, ASPALATHUS LINEARIS, A CAFFEINELESS, LOW-TANNIN BEVERAGE" ECONOMIC BOTANY, NEW YORK BOTANICAL GARDEN, BRONX, NY, US, vol. 37, no. 2, 1983, pages 164-173, XP000600542 ISSN: 0013-0001
- JOUBERT E., DE VILLIERS O.T.: "Effect of fermentation and drying conditions on the quality of rooibos tea" INTERNATIONAL JOURNAL OF FOOD SCIENCE AND TECHNOLOGY, vol. 32, no. 2, 1997, pages 127-134, XP009072749
- PATENT ABSTRACTS OF JAPAN vol. 1998, no. 08, 30 June 1998 (1998-06-30) & JP 10 075727 A (YOSHIZAWA MASAO; MIYASHITA SUSUMU), 24 March 1998 (1998-03-24)
- DATABASE WPI Week 200612 Derwent Publications Ltd., London, GB; AN 2006-118775 XP002404014 & ZA 200 400 776 A (BENEDICT TECHNOLOGY HOLDINGS PTY LTD) 29 December 2004 (2004-12-29)

## Description

### FIELD OF THE INVENTION

This invention relates to a bush tea product that is particularly aimed at enabling a beverage that is different from conventional bush tea beverages to be produced, as and when required.

It is to be understood that the term "bush tea product" as used in this specification is intended to mean a bush tea that has been processed to a stage at which it is ready for the consumer market for the purpose of the preparation of beverages by a customer by an extraction process in which the tea is contacted with hot water. The term therefore excludes any bush tea that is partially processed or that is processed for the purpose of commercially preparing extracts for various purposes other than the preparation of beverages by a customer therefrom. Such other purposes may be the preparation of ready to drink beverages; and the use as additives to foods, cosmetics, and other health care products.

### FIELD OF THE INVENTION

So-called bush teas are generally considered to include both of those known as Rooibos (Aspalathus linearis) and Honeybush (Cyclopia). Such teas have been gaining in popularity in recent times, in particular in view of their being a herbal product and consequently associated with good health. They are typically caffeine free, high in antioxidants and, accordingly, find a ready market with persons who are either adversely affected by the presence of caffeine in other tea or coffee beverages or that simply wish to avoid the intake of caffeine, being a stimulant that is considered, at least by some, to have deleterious effects.

The preparation of a bush tea typically involves the harvesting of green tea; the bundling of the green tea into sheaves; chopping the tea in a suitable cutter to lengths of between about 2 and 6 millimetres (about 0.08 and 0.24 inch); forming the subdivided tea into piles on a concrete slab, or as they are sometimes known, tea courts; wetting the tea and allowing it to ferment, typically overnight; and thereafter spreading it out and allowing it to dry over a period of some days.

The general characteristics and production of bush tea in the form of normal rooibos tea are described in an article by Julia F Morton entitled "Rooibos Tea, Aspilanthus linearis, a Caffeinless, Low-Tannin Beverage"; Economic Botany, 37(2), 1983, pp 164-173 especially at p 167.

The general treatment and preparation of bush tea is also described in British patent number GB 07267 AD 1907 that further describes an added grading step aimed at eliminating woody fibre from the bush tea product.

At this stage, bush tea that is destined for commercial extraction may be passed to subsequent processing steps, as may be required. Such commercial extraction may be aimed at producing an extract for use as an ingredient for making ready-made beverage in bottled form; for use in as an additive to a wide variety of herbal cosmetics and other health preparations, and possibly for use in the production of an instant type of product typically by freeze-drying. Applicant is, however, unaware at this point in time of such a freeze-dried product being freely available commercially. Generally, it would not be necessary to sterilise or pasteurise such commercially processed bush tea as it is automatically sterilised during the commercial extraction process at elevated temperature.

On the other hand, the bush tea that is destined for use as a bush tea product as defined above is then treated to remove excessively large particles, typically particles retained on a so-called 8 mesh screen (being a screen commonly known in the trade and having 64 holes per square inch (6.45 cm²) arranged in an 8 by 8 grid pattern), and the oversize particles may be discarded; sent to a commercial extraction process; recycled; or otherwise treated as may be required.

Also, at this stage, excessively fine particles that are usually referred to as dust, and that are deleterious to the conduct of the sterilisation process that is subsequently performed on the tea preparatory to packaging it for sale, are removed. The fine particles removed are typically those that pass through a so-called 40 or 60 mesh screen (being screens also commonly known in the trade and having a grid of either 40 by 40 or 60 by 60 holes per square inch (6.45 cm²)).

The dust that has been removed is generally not suitable for sterilisation in its finely subdivided form and may, accordingly, be pelletised prior to the pellets being sterilised and typically added back to the sterilised tea product in order to enhance overall extraction in the final beverage from the bush tea product. Alternatively, the dust may be used in a commercial extraction process.

A significant portion of bush tea product are flavoured with other natural products such as various types of fruit, honey, and various different herbs in order to provide a variety of different flavours of what is basically bush tea.

The bush tea product may be packaged loose in bulk packs; it may be packed in tea bags; or it may be packaged in any other unit such as small packets, pods and capsules suitable for use in producing typically one cup or pot of beverage at a time.

The difficulty, as far as applicant is aware, with all forms of bush tea product presently available for use in the production of beverages, is that it is difficult to produce a relatively strong beverage from it without considerable trouble.

### OBJECT OF THE INVENTION

It is an object of this invention to provide a bush tea product that is better suited to producing a relatively strong beverage from it. It is another object of the invention to provide a method of making such a relatively strong beverage. It is a further object of the invention to provide a method of producing such a bush tea product. It is another object of the invention to enable an increase in the amount of antioxidants present in a bush tea beverage.

### SUMMARY OF THE INVENTION

In accordance with one aspect of this invention there is provided a bush tea product comprising a bush tea that has been prepared using the steps of chopping harvested tea; subjecting the tea to wetting, fermenting and drying, optionally removing oversized particles and so-called dust as may be necessary or required and subjecting the tea to sterilisation, the bush tea product being characterized in that at least 10 percent by weight of the bush tea present therein is in a pulverised form resulting from a mechanical pulverising action performed thereon.

Further features of this aspect of the invention provide for either all of the bush tea present to be in a pulverised form, or, alternatively, for a proportion of normal bush tea product to be admixed therewith in which case, the pulverised bush tea preferably constitutes from about 20 to about 80 percent by weight of the bush tea product; and for the bush tea product to be packaged either in packages of loose tea (bulk packages) or in sachets, pods, capsules or tea bags for enabling one or more predetermined unit quantities thereof to be employed at one time.

Typically, and without limiting the scope of the invention, at least about 50 percent, and generally at least about 60 or 70 percent, of the pulverised tea would pass a 0.5 millimetre mesh sieve and at least a part, typically at least about 10 percent, will be in powder form passing a 0.15 millimetre mesh sieve.

In accordance with a second aspect of this invention there is provided a bush tea product in the form of a mass of bush tea particles, the bush tea product being characterized in that at least 50 percent by weight of the bush tea particles present pass a 0.5 millimetre screen.

Further features of this aspect of the invention provide for at least 60, and preferably at least 70 percent by weight of the bush tea particles to pass a 0.5 millimetre screen; and for at least 10 percent by weight of the particles and preferably 15 percent by weight of the particles, and more preferably at least 20 percent by weight of the particles to pass a 0.15 millimetre screen.

In accordance with a third aspect of the invention there is provided a marketable package of bush tea product suitable for distribution by way of a conventional distribution network characterized in that the bush tea is as defined above.

In accordance with a fourth aspect of the invention there is provided a method of preparing a bush tea product from a bush tea that has itself been prepared using the steps of chopping harvested tea; subjecting the tea to wetting, fermenting and drying, optionally removing oversized particles and so-called dust as may be necessary and subjecting the tea to sterilisation, the method of this invention being characterised in that the bush tea prepared utilizing the aforesaid steps is, subsequent to the stated steps, subjected to pulverisation in order to reduce the particle size thereof.

In accordance with a fifth aspect of the invention there is provided a method of forming a relatively strong beverage from a bush tea product as defined above characterised in that heated water is passed through a quantity of the bush tea product under pressure in a process substantially analogous to that used for producing espresso coffee.

Typically the method would be carried out utilising the same equipment (espresso machine) as is used for the production of espresso coffee.

From the above it will thus be understood that the term "pulverised" as used in this specification is intended to mean a bush tea that is in a substantially more finely subdivided form than that in which it is normally made available for infusion and consumption, and in general, will mean bush tea in the dried form in which it is substantially ready for the production of an infusion utilising conventional techniques and wherein that dried form is subjected to subdivision by mechanical working of the dried tea utilising a process such as grinding, milling, pulverising, cutting, chopping or crushing to produce a particle size substantially smaller than the initial dried tea or normal dried tea ready for infusion.

The activity of pulverising the dried tea will, it is envisaged, be quite distinct from, and independent of, any chopping of the tea preparatory to the wetting, fermenting and drying stages of normal tea production and will typically, although not necessarily, be conducted after sterilisation of the dried tea as a considerable quantity of fine particles is produced by the pulverisation and this would be deleterious to the conduct of a conventional steam sterilisation process following pulverisation were this to be the case. Also, in terms of this invention, the fine particles are a most desirable component of the bush tea product, as will become apparent from the following.

Nevertheless, inspite of the fact that it is envisaged that the finely subdivided, pulverised bush tea required of this invention will be obtained by subdividing dried bush tea that is substantially in a form in which it could be infused in the conduct of conventional practice, finely subdivided pulverised bush tea having similar particle sizes and ranges obtained by any other route are intended to fall within the scope of this invention. Thus, for example, should it prove to be feasible to finely subdivide the bush tea prior to, or part way through, the normal tea production process, followed by drying and optionally breaking up any agglomerates that may form, such a product is intended to fall within the scope of this invention.

### DETAILED DESCRIPTION

It is envisaged that it may be appropriate to market the bush tea product of this invention in two different forms, namely, a form comprising 100 percent pulverised bush tea and one in which the pulverised bush tea is admixed with conventional bush tea that has not been pulverised in order to increase the permeability of the tea to water, particularly in a pressure extraction situation such as in an espresso machine. The reason for this is that domestic or relatively inexpensive espresso machines can generally not achieve the same high pressures as can be achieved in commercial espresso machines and enhanced permeability may be desirable for use in espresso machines operating at lower pressures. Also, is to be noted, that whilst espresso style extraction of the bush tea product is indicated as being preferred, it is by no means the exclusive way in which it is envisaged that beverages will be made utilising the bush tea, of the invention. In particular, it is envisaged that plunger style coffee making jugs may be used wherein the bush tea product is admixed with a water in a special jug and a plunger filter is depressed into the jug, after a selected contact time, to collect the tea particles and trap them in the bottom of the jug.

In a preferred implementation of the invention that is suitable for use in commercial espresso machines, a 100 percent pulverised rooibos tea is employed for the purposes of producing a concentrated beverage as indicated above.

For test purposes dried rooibos tea that was in a condition for use in terms of conventional practice was subjected to mechanical pulverising in a conventional milling machine of the type known as a hammer mill and utilising either a 1.8mm (creating Sample A below) or a 2.0 mm screen (creating Sample B below).

The two different samples of pulverised rooibos tea that were produced in this way were tested in order to demonstrate the enhanced extraction achieved utilising the pulverised bush tea product of the invention tea. Similar tests were concurrently conducted on a commercially available rooibos tea product; an untreated (unpulverised) rooibos tea product from which the pulverised samples were made; and a commercially produced rooibos tea dust. The particle size composition of the relevant rooibos tea products and dust were as follows:-

| Sieve Size | Mass percent of tea retained on stated sieve size | | | | |
|---|---|---|---|---|---|
| | Commercial Bush Tea | Untreated Bush Tea | Pulverized Bush Tea 1.8mm Scr (Sample A) | Pulverized Bush Tea 2.0mm Scr (Sample B) | BushTea Dust |
| 0.50mm | 88.0 | 91.5 | 24.9 | 18.2 | 0.1 |
| 0.355mm | 7.3 | 5.3 | 10.7 | 15.0 | 8.0 |
| 0.250mm | 3.2 | 2.3 | 17.2 | 20.0 | 36.0 |
| 0.150mm | 1.2 | 0.8 | 23.5 | 24.0 | 33.5 |
| Fines | 0.3 | 0.1 | 23.7 | 22.8 | 22.4 |

Each of these two pulverised rooibos teas, as well as the commercially available sample and the sample of the untreated (that is unpulverised) starting rooibos tea, were subjected to extraction under identical conditions in two different procedures.

The first procedure was carried out using a commercial espresso machine. In each instance 80 millilitres of boiling water was expressed at 1.5 bar pressure through a 10 gram sample of the relevant rooibos tea product and the results are given below as the average of five different extractions, in each case:-

Extraction using a commercial espresso machine:-

| Sample | Commercial | Untreated | Sample A | SampleB |
|---|---|---|---|---|
| Soluble Solids Extracted (g/100ml) | 1.185 | 0.988 | 2.313 | 2.095 |
| Total Antioxidants (mM/100ml) | 18.20 | 17.15 | 37.16 | 31.66 |

It will be noted that the extraction of soluble solids increased by approximately two fold in the case of the two pulverised samples whilst the extraction from the commercial sample and the untreated sample were approximately the same. In keeping with this increased extraction, the total antioxidants extracted were likewise approximately double that extracted from the commercial and untreated samples.

It was noted that the concentration of antioxidants in the soluble solids was approximately constant in all cases. It was also noted that the percentage extraction of total polyphenols was also approximately constant irrespective of the increased extraction of soluble solids.

A very much enhanced and concentrated rooibos beverage was thus produced, and this with no additional starting material and only the pulverising action having been responsible for enhancing the extraction.

The second procedure was carried out using a plunger operated jug of the type widely used for brewing coffee and wherein the bush tea was mixed for 60 seconds with boiling water using a magnetic stir after which the plunger was operated to concentrate the solids at the bottom of the jug. In each instance 80 millilitres of boiling water was mixed with a 10 gram sample of the relevant rooibos tea product and the results are given below as the average of five different extractions, in each case:-

Extraction using a plunger type of coffee jug:-

| Sample | Commercial | Untreated | Sample A | SampleB |
|---|---|---|---|---|
| Soluble Solids Extracted (g/100ml) | 1.080 | 1.364 | 2.402 | 2.446 |
| Total Antioxidants (mM/100ml) | 15.73 | 17.70 | 33.32 | 33.55 |

The enhanced extraction and corresponding increasing antioxidants is substantially the same as was achieved utilising the espresso machine.

It is therefore envisaged that pulverised rooibos tea product, and by analogy honey bush tea product, can be packaged for sale with the aim of achieving enhanced extraction utilising either a pressure extraction machine such as an espresso machine or a plunger type of jug. Packaged rooibos tea and honey bush tea of this nature thus represent a meaningful addition to the range of beverages that are commercially available.

As indicated above, it is also within the scope of this invention that, in order to enhance permeability of the tea for use on relatively low pressure machines, a proportion of untreated conventional bush tea can be admixed with the pulverised bush tea. Indeed, extraction tests conducted in an identical manner to those described above on the dust identified above resulted in a complete blockage when carried out using the commercial espresso machine.

In such an instance it is possible to add a proportion, say up to about 50 percent by weight, of untreated (unpulverised) tea to the pulverised rooibos tea.

In either event, the bush tea product of this invention may be packaged in bulk packages or in small packets like pods and capsules suitable for use in an espresso machine for producing typically one cup of beverage at a time, or for use in plunger type jugs. This type of packaging may ensure that the finer pulverised component of the tea does not settle out and cause uneven mixtures to be extracted from, for example, a bulk supply.

It is also within the scope of this invention that individual portions of the mixture be packaged in permeable bags such as tea bags of a suitable nature or, alternatively, in impervious sachets that are adapted to be ruptured when being employed, for example automatically in an espresso type of machine.

It is also within the scope of this invention that other natural products can be added to the tea, substantially in conventional manner, in order to provide different flavours.

It is to be noted that, because the pulverising action carried out on the bush tea in terms of this invention effectively sub-divides the bush tea, it may be unnecessary to carry out the chopping action typically forming part of the tea production process or, alternatively, carrying out the chopping action to the same extent as for the production of conventional bush tea product.

The invention therefore provides a simple yet highly effective expedient for providing a different and stronger bush tea beverage than has been possible heretofore without indulging in sophisticated and costly procedures such as concentrating by evaporation.

## Claims

1. A bush tea product being a bush tea that is in a form in which it is ready for the consumer market for the purpose of the preparation of beverages by a customer by an extraction process in which the tea is contacted with hot water, the bush tea product being **characterized in that** at least 10 percent by weight of the bush tea present is pulverised bush tea in which at least 50 percent by weight of the pulverised tea has a particle size selected to pass a 0.5 millimetre mesh screen and at least 10 percent by weight is in powder form that passes a 0.15 millimetre mesh screen.

2. A bush tea product as claimed in claim 1 in which all of the bush tea present is pulverised bush tea.

3. A bush tea product as claimed in any one of the preceding claims in which the bush tea product is packaged either in packages of loose tea (bulk packages) or in individual small packets selected from the group consisting of sachets, pods, capsules and tea bags for enabling one or more predetermined unit quantities thereof to be employed at one time.

4. A bush tea product in the form of a mass of bush tea particles and being a bush tea that is in a form in which it is ready for the consumer market for the purpose of the preparation of beverages by a customer by an extraction process in which the tea is contacted with hot water, the bush tea product being **characterized in that** at least 50 percent by weight of the bush tea particles present pass a 0.5 millimetre screen and **in that** at least 10 percent by weight of the particles present pass a 0.15 millimetre screen.

5. A bush tea product as claimed in claim 4 in which at least 70 percent by weight of the bush tea particles present pass a 0.5 millimetre screen and at least 15 percent by weight of the particles present pass a 0.15 millimetre screen.

6. A marketable package of bush tea product suitable for distribution by way of a conventional distribution network **characterized in that** the bush tea product contained therein is as claimed in any one of claims 1 to 5.

7. A method of preparing a bush tea being a bush tea that is in a form in which it is ready for the consumer market for the purpose of the preparation of beverages by a customer by an extraction process in which the tea is contacted with hot water, the method being **characterised in that** sterilised normal bush tea is subjected to pulverisation in order to reduce the particle size thereof.

8. A method as claimed in claim 7 in which pulverisation is carried out to reduce the particle size of the bush tea such that at lest 50 percent by weight of the bush tea particles present pass a 0.5 millimetre screen and in that at least 10 percent by weight of the particles present pass a 0.15 millimetre screen.

9. A method as claimed in claim 8 in which pulverisation is carried out to reduce the particle size of the bush tea such that at least 70 percent by weight of the bush tea particles present pass a 0.5 millimetre screen and at least 15 percent by weight of the particles present pass a 0.15 millimetre screen.

10. A method of forming a relatively strong beverage from a bush tea product as claimed in any one of claims 1 to 5 **characterized in that** heated water is passed through a quantity of the bush tea product under pressure in a process substantially analogous to that used for producing espresso coffee.

## Patentansprüche

1. Kräuterteeprodukt, das ein Kräutertee in einer Form ist, in der er für den Verbrauchermarkt zum Zweck der Zubereitung von Getränken durch einen Kunden durch einen Extraktionsprozess bereit ist, bei dem der Tee mit heißem Wasser in Berührung gebracht wird, wobei das Kräuterteeprodukt **dadurch gekennzeichnet ist, dass** mindestens 10 Gewichtsprozent des vorhandenen Kräutertees fein gemahlener Kräutertee sind, wobei mindestens 50 Gewichtsprozent des fein gemahlenen Tees eine Partikelgröße haben, die ausgewählt ist, um durch ein 0,5-Millimeter-Maschensieb durchzugehen, und mindestens 10 Gewichtsprozent in Pulverform vorliegen, die durch ein 0,15 Millimeter-Maschensieb durchgeht.

2. Kräuterteeprodukt nach Anspruch 1, wobei der gesamte vorhandene Kräutertee fein gemahlener Kräutertee ist.

3. Kräuterteeprodukt nach einem der vorhergehenden Ansprüche, wobei das Kräuterteeprodukt entweder in Verpackungen aus losem Tee (Großpakete) oder in einzelnen kleinen Paketen abgepackt ist, die aus einer Gruppe ausgewählt sind, die aus Säckchen, Pads, Kapseln und Teebeuteln besteht, um zu ermöglichen, dass eine oder mehrere vorbestimmte Einzelmengen auf einmal verwendet werden.

4. Kräuterteeprodukt in der Form einer Masse aus Kräuterteepartikeln, bestehend aus Kräutertee, der eine Form hat, in der er für den Verbrauchermarkt zum Zweck der Zubereitung von Getränken durch einen Kunden durch einen Extraktionsprozess bereit ist, wobei der Tee mit heißem Wasser in Berührung gebracht wird, wobei das Kräuterteeprodukt **dadurch gekennzeichnet ist, dass** mindestens 50 Gewichtsprozent der Kräuterteepartikel durch ein 0,5-Millimeter-Maschensieb durchgehen, und mindestens 10 Gewichtsprozent der vorhandenen Partikel durch ein 0,15 Millimeter-Maschensieb durchgehen.

5. Kräuterteeprodukt nach Anspruch 4, wobei mindestens 70 Gewichtsprozent der vorhandenen Kräuterteepartikel durch ein 0,5-Millimeter-Maschensieb durchgehen und mindestens 15 Gewichtsprozent der vorhandenen Partikel durch ein 0,15 Millimeter-Maschensieb durchgehen.

6. Vermarktbare Verpackung eines Kräuterteeprodukts, die für den Vertrieb auf einem herkömmlichen Vertriebsnetzwerk geeignet ist, **dadurch gekennzeichnet, dass** das darin enthaltene Kräuterteeprodukt wie in einem der Ansprüche 1 bis 5 beansprucht beschaffen ist.

7. Verfahren zum Zubereiten eines Kräutertees in einer Form, die für den Verbrauchermarkt zum Zweck der Zubereitung von Getränken durch einen Kunden durch ein Extraktionsverfahren bereit ist, wobei der Tee mit heißem Wasser in Berührung gebracht wird, wobei das Verfahren **dadurch gekennzeichnet ist, dass** sterilisierter normaler Kräutertee einem Mahlen unterworfen wird, um seine Partikelgröße zu verringern.

8. Verfahren nach Anspruch 7, bei dem das Mahlen ausgeführt wird, um die Partikelgröße des Kräutertees derart zu verringern, dass mindestens 50 Gewichtsprozent der vorhandenen Kräuterteepartikel durch ein 0,5-Millimeter-Maschensieb durchgehen und mindestens 10 Gewichtsprozent der vorhandenen Partikel durch ein 0,15 Millimeter-Maschensieb durchgehen.

9. Verfahren nach Anspruch 8, bei dem das Mahlen ausgeführt wird, um die Partikelgröße des Kräutertees derart zu verringern, dass mindestens 70 Gewichtsprozent der vorhanden Kräuterteepartikel durch ein 0,5-Millimeter-Maschensieb durchgehen und mindestens 15 Gewichtsprozent der vorhandenen Partikel durch ein 0,15 Millimeter-Maschensieb durchgehen.

10. Verfahren zum Bilden eines relativ starken Getränks aus einem Kräuterteeprodukt nach einem der Ansprüche 1 bis 5, **dadurch gekennzeichnet, dass** das erhitzte Wasser durch eine Menge von Kräuterteeprodukt unter Druck in einem Prozess durchgeht, der im Wesentlichen zu dem analog ist, der zum Erzeugen von Espressokaffee verwendet wird.

## Revendications

1. Produit de thé de type Rooibos, sous une forme prête pour le marché des consommateurs, destiné à la préparation de boissons par un consommateur par un processus d'extraction dans lequel le thé est mis en contact avec de l'eau chaude, le produit de thé de type Rooibos étant **caractérisé en ce qu'**au moins 10 % en poids du thé de type Rooibos présent est du thé de type Rooibos pulvérulent dans lequel au moins 50 % en poids du thé pulvérulent a une taille de particule sélectionnée pour passer à travers un tamis à mailles de 0,5 mm et au moins 10 % en poids se présente sous forme pulvérulente passant à travers un tamis à mailles de 0,15 mm.

2. Produit de thé de type Rooibos selon la revendication 1, dans lequel la totalité du thé de type Rooibos présent est du thé Rooibos pulvérulent.

3. Produit de thé de type Rooibos selon l'une quelconque des revendications précédentes, dans lequel le produit de thé de type Rooibos est emballé soit dans des emballages de thé en vrac (emballages en vrac), soit en petits paquets individuels sélectionnés parmi le groupe constitué des pochettes, des dosettes, des capsules et des sachets de thé pour permettre d'utiliser à chaque fois une ou plusieurs quantités unitaires prédéterminées.

4. Produit de thé de type Rooibos sous forme d'une masse de particules de thé de type Rooibos et étant un thé de type Rooibos sous une forme prête pour le marché des consommateurs, destiné à la préparation de boissons par un consommateur par un processus d'extraction dans lequel le thé est mis en contact avec de l'eau chaude, le produit de thé de type Rooibos étant **caractérisé en ce qu'**au moins 50 % en poids des particules de thé de type Rooibos présentes passent à travers un tamis à mailles de 0,5 mm et **en ce qu'**au moins 10 % en poids des particules présentes passent à travers un tamis à mailles de 0,15 mm.

5. Produit de thé de type Rooibos selon la revendication 4, dans lequel au moins 70 % en poids des particules de thé de type Rooibos présentes passent à travers un tamis à mailles de 0,5 mm et au moins 15 % en poids des particules présentes passent à travers un tamis à mailles de 0,15 mm.

6. Emballage commercialisable d'un produit de thé de type Rooibos approprié pour la distribution par le biais d'un réseau de distribution conventionnel, **caractérisé en ce que** le produit de thé de type Rooibos contenu dans celui-ci est selon l'une quelconque des revendications 1 à 5.

7. Procédé de préparation d'un thé de type Rooibos étant un thé qui se présente sous une forme prête pour le marché des consommateurs, destiné à la préparation de boissons par un consommateur par un processus d'extraction dans lequel le thé est mis en contact avec de l'eau chaude, le procédé étant **caractérisé en ce que** du thé de type Rooibos normal stérilisé est soumis à une pulvérisation afin de réduire sa taille de particule.

8. Procédé selon la revendication 7, dans lequel la pulvérisation est effectuée de manière à réduire la taille de particule du thé de type Rooibos de telle sorte qu'au moins 50 % en poids des particules de thé de type Rooibos présentes passent à travers un tamis à mailles de 0,5 mm et en ce qu'au moins 10 % en poids des particules présentes passent à travers un tamis à mailles de 0,15 mm.

9. Procédé selon la revendication 8, dans lequel la pulvérisation est effectuée de manière à réduire la taille de particule du thé de type Rooibos de telle sorte qu'au moins 70 % en poids des particules de thé de type Rooibos présentes passent à travers un tamis à mailles de 0,5 mm et au moins 15 % en poids des particules présentes passent à travers un tamis à mailles de 0,15 mm.

10. Procédé de préparation d'une boisson relativement forte à partir d'un produit de thé de type Rooibos selon l'une quelconque des revendications 1 à 5, **caractérisé en ce que** l'on fait passer de l'eau chauffée à travers une quantité du produit de thé de type Rooibos sous pression dans un procédé substantiellement analogue à celui utilisé pour préparer un café de type expresso.
